(19) Europäisches Patentamt
European Patent Office
Office européen des brevets

(11) Publication number: **0 251 373 B1**

# (12) EUROPEAN PATENT SPECIFICATION

(45) Date of publication of patent specification: **28.10.92** (51) Int. Cl.[5]: **C08G 67/02**

(21) Application number: **87201109.3**

(22) Date of filing: **11.06.87**

## (54) Copolymers of carbon monoxide.

(30) Priority: **20.06.86 NL 8601605**

(43) Date of publication of application:
**07.01.88 Bulletin 88/01**

(45) Publication of the grant of the patent:
**28.10.92 Bulletin 92/44**

(84) Designated Contracting States:
**AT BE CH DE ES FR GB GR IT LI NL SE**

(56) References cited:
**EP-A- 0 118 312**
**EP-A- 0 121 965**
**EP-A- 0 181 014**
**FR-A- 2 213 947**
**FR-A- 2 223 305**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Drent, Eit**
**Badhuisweg 3**
**NL-1031 CM Amsterdam(NL)**

**EP 0 251 373 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to novel polymers of carbon monoxide with at least two olefinically unsaturated organic compounds.

Polymers of carbon monoxide with one or more olefinically unsaturated hydrocarbons contain carbonyl groups as functional groups, which is why they are also referred to as polyketones. By chemical reaction these carbonyl groups can be at least partly converted into a variety of other functional groups. This chemical modification changes the properties of the polymers and renders them eligible for uses for which the original polymers were not or not very suitable. Examples of chemical reactions to which the polymers can be subjected that may be mentioned are conversion into polyamines through catalytic hydrogenation in the presence of ammonia, conversion into polyalcohols by catalytic hydrogenation, conversion into polyphenols by condensation with phenols and finally, conversion into polythiols by catalytic hydrogenation in the presence of hydrogen sulphide.

A special class of polymers of carbon monoxide with olefinically unsaturated hydrocarbons (for the sake of brevity referred to as A) is formed by the high molecular weight linear alternating polymers made up of units of the general formula -CO-(A′)-, wherein A′ represents a monomer unit orginating in a monomer A used. Such polymers can be prepared, inter alia, by using catalyst compositions based upon

a) a palladium compound,

b) an anion of an acid with a pKa of less than 2, provided that the acid is not a hydrohalogenic acid, and

c) either a phosphorus bidentate ligand, or a nitrogen bidentate ligand, which bidentate ligands should satisfy certain structural requirements.

An important group among the above-mentioned high molecular weight linear alternating polymers is formed by the copolymers of carbon monoxide and ethene which are made up of units of the formula -CO-($C_2H_4$)-. These polymers possess excellent mechanical properties, notably very high strength, stiffness and impact resistance. Despite their being rather simple to prepare, from very cheap starting materials, these polymers have found no practical use thus far. This is mainly due to the high melting point of these polymers, which is about 257 °C, and the allied working-up problems.

An investigation of these polymers recently carried out by the Applicant has shown that their melting point can be substantially reduced when, in addition to carbon monoxide and ethene, a relatively small amount of one or more other olefinically unsaturated hydrocarbons (for the sake of brevity referred to as X), is incorporated into the monomer mixture from which the polymers are prepared. The use of the above-mentioned catalyst compositions with such a monomer mixture leads to polymers which are made up of units of the formula -CO-($C_2H_4$)- and units of the general formula -CO-(X′)-, wherein X′ represents a monomer unit originating in a monomer X used.

A further investigation into the subject has now shown that a decrease of the melting point of the carbon monoxide/ethene copolymers can also be achieved by incorporating into the monomer mixture from which they are prepared, in addition to carbon monoxide and ethene, a relatively small amount of one or more carboxylic acid esters (for the sake of brevity referred to as B), in which esters there occurs a polymerizable $>C=C<$ group directly linked to a carbonyloxy group. The use of the above-mentioned catalyst compositions with such a monomer mixture leads to the formation of polymers which are made up of units of the formula -CO-($C_2H_4$)- and units of the formula -CO-(B′)-, wherein B′ represents a monomer unit originating in a monomer B used.

Besides a reduction of the melting point of carbon monoxide/ethene copolymers, the use as co-monomers of the afore-mentioned esters in addition to carbon monoxide and olefinically unsaturated hydrocarbons involves a chemical modification of the polymers due to the introduction of carbonyloxy groups as functional groups in addition to the carbonyl groups orginally present in the polymers. Unlike the chemical modification mentioned earlier, in which at least part of the carbonyl groups present in the polymers is converted into other functional groups, i.e. a chemical modification carried out after their formation, the use as co-monomers of the afore-mentioned esters can be regarded as an in-situ chemical modification, i.e. a modification brought about in the course of the polymer preparation. Just like the carbonyl groups, the carbonyloxy groups can be converted at least partly into a variety of other functional groups by chemical reaction after the polymer formation. The use of the afore-mentioned esters as co-monomers is therefore not only important for reducing the melting point of carbon monoxide/ethene copolymers and for the in-situ chemical modification of these polymers, but also for the in-situ chemical modification of polymers of carbon monoxide and other olefinically unsaturated hydrocarbons. The use of the above-mentioned catalyst compositions with a monomer mixture which, in addition to carbon monoxide and one or more olefinically unsaturated hydrocarbons (A), contains one or more of the afore-mentioned esters (B), leads to the formation of linear polymers which are made up of units of the general formula -CO-(A′)- and units of the general formula -CO-(B′)-. In order to achieve the object aimed at, the quantities of the monomers A and B present in the mixture from which the polymers are prepared should be chosen such as to afford polymers containing 10-400 units -CO-(A′)- per units -CO-(B′)-.

In summary, the polymers to which the invention relates can be defined as follows:

a) they are prepared by the polymerization of carbon monoxide with one or more olefinically unsaturated hydrocarbons (A) and with one or more carboxylic acid esters (B) in which there is present a polymerizable $>C=C<$ group directly linked to a carbonyloxy group,

b) they have a linear structure,

c) they are made up of units of the general formula -CO-(A′)- and units of the general formula -CO-(B′)-, wherein A′ and B′ represent monomer units originating in monomers A and B, respectivley, that are used, and

d) per unit -CO-(B′)- they contain 10-400 units -CO-(A′)-.

Polymers that meet the criteria a)-d) are novel.

The present patent application therefore relates to novel polymers of carbon monoxide with at least two olefinically unsaturated organic compounds, which polymers meet the criteria mentioned hereinbefore under a)-d), as well as to novel polymers which can be derived therefrom by converting at least part of the carbonyl and/or carbonyloxy groups into other functional groups by way of chemical modification. Further, the patent application relates to the preparation of both types of polymers as well as to shaped objects consisting at least partly of these polymers.

The polymers according to the invention contain 10-400 units -CO-(A′)- per unit -CO-(B′)-. Preference is given to polymers which contain fewer than 350 and in particular fewer than 300 units -CO-(A′)- per unit -CO-(B′)-.

The olefinically unsaturated hydrocarbons used as monomers A in the preparation of the polymers according to the invention preferably contain at most 20, and in particular at most 10, carbon atoms. Both aromatic and aliphatic hydrocarbons are eligible as monomers A. Examples of suitable aromatic hydrocarbons are styrene and alkyl-substituted styrenes, such as p-methyl styrene and p-ethyl styrene. Preference is given to aliphatic hydrocarbons and in particular to $\alpha$-olefins such as ethene, propene, butene-1, pentene-1, hexene-1 and octene-1. In the preparation of the polymers it is preferred to use only one monomer A. A particularly preferred monomer A is ethene.

Like the monomers A, the carboxylic acid esters used as monomers B in the preparation of the polymers preferably contain at most 20, and in particular at most 10, carbon atoms. Both aromatic and aliphatic esters are eligible as monomers B. In the aromatic esters the aromaticity may be found both in the carboxylic-acid-derived part and in the alcohol-derived part of the ester molecule. Examples of suitable aromatic esters are vinyl benzoate and phenyl acrylate. Preference is given to aliphatic esters, i.e. esters which can be thought of as being derived from an aliphatic carboxylic acid and an aliphatic alcohol. The monomers B can be divided into two categories according to the position which the polymerizable $>C=C<$ group holds within the ester molecule. The catoxylic acid esters in which the polymerizable $>C=C<$ group is present in the alcohol-derived part of the molecule belong to the first category. The second category is made up of the carboxylic acid esters in which the polymerizable $>C=C<$ group occurs in the carboxylic-acid-derived part of the molecule. When an ester belonging to the first category is used as monomer B, preference is given to esters of saturated aliphatic monocarboxylic acids in which there occurs a $CH_2=CR$-group directly linked to the carbonyloxy group and in which R represents an alkyl group or a hydrogen atom, and in particular such esters with R representing a hydrogen atom. Examples of such esters are vinyl esters of acetic acid, propionic acid, butyric acid, pivalic acid as well as isopropenyl esters of such aliphatic carboxylic acids. When an ester belonging to the second category is used as monomer B, preference is given to alkyl esters of unsaturated aliphatic monocarboxylic acids in which there occurs a $CH_2=CR$-group directly linked to the carbonyloxy group and in which R represents an alkyl group or a hydrogen atom, and in particular such esters with R representing a hydrogen atom or a methyl group. Examples of such esters are methyl, ethyl, propyl, butyl and iso-butyl esters of acrylic acid and methacrylic acid. In the preparation of the polymers it is preferred to use only one monomer B. Specially preferred monomers B are chosen from vinyl acetate, methyl acrylate and methyl methacrylate.

When chemical modification of the polymers according to the invention is conducted by way of the introduced carbonyloxy groups, there is a distinction as to whether in the preparation of the polymer an ester of the first category was used as monomer B or an ester of the second category. This is due to the different ways in which the carbonyloxy groups are linked to the carbon chains of the polymers. When an ester of the first category is used, this will afford a polymer in which the carbonyloxy groups are linked to the carbon chain by an oxygen atom. When an ester of the second category is used, this will afford a polymer in which the carbonyloxy groups are linked to the carbon chain by the carbon atom. The difference

in behaviour during chemical modification may appear from the following example. When a polymer according to the invention which was prepared by using a monomer B of the first category is subjected to saponification, this will lead to the foundation of a polymer in which a hydroxyl group is found in those places where these were originally a carbonyloxy group, i.e. the polymer has been conveted into a polyalcohol. However, when a polymer according to the invention which was prepared by using an ester of the second category is subjected to saponification, this will lead to the formation of a polymer in which a carboxyl group is found in those places where there was originally a carbonyloxy group, i.e. the polymer has been converted into a polycarboxylic acid. Besides the afore-mentioned saponification, there are a variety of other chemical modifications to which the polymers containing carbonyloxy groups as functional groups can be subjected. For instance, in the polymers according to the invention which have been prepared by using an ester of the second category as monomer B, at least part of the carbonyloxy groups can be converted into amide groups through reaction with an amine, and the amide groups can optionally be further converted into amine groups through hydrogenation, or at least part of the carbonyloxy groups can be converted into aldehyde or alcohol groups through hydrogenation and the alcohol groups can optionally be further converted into halogen-containing groups.

For the preparation of the polymers according to the invention use is preferably made of the afore-mentioned catalyst compositions containing a phosphorus or nitrogen bidentate ligand. The palladium compound used as component a) in these catalyst compositions is preferably a palladium salt of a carboxylic acid and in particular palladium acetate. Examples of suitable acids with a pKa of less than 2 (determinated in aqueous solution at 18 °C) whose anion should be present in the catalyst compositions as component b), are sulphuric acid, perchloric acid, sulphonic acids, such as methanesulphonic acid, trifluoromethanesulphonic acid and para-toluenesulphonic acid, and carboxylic acids, such as trichloroacetic acid, difluoroacetic acid and trifluoroacetic acid. Preference is given to para-toluenesulphonic acid and trifluoroacetic acid.

Component b) is preferably present in the catalyst compositions in a quantity of from 0.5 to 200, and in particular of from 1.0 to 100, equivalents per gram atom of palladium. Component b) may be incorporated into the catalyst compositions either as an acid or as a salt. Eligible salts include non-noble transition metal salts. Examples of transition metals whose salts are suitable for use as component b) are the Group 4B metal zirconium, the Group 5B metal vanadium, the Group 6B metal chromium, the Group 8 metals iron and nickel, the Group 1B metal copper, the lanthanide cerium and the actinides thorium and uranium. If component b) is applied in the catalyst compositions in the form of an acid or as a non-noble transition metal salt, then it is preferred also to incorporate a quinone as a component d) in order to enhance the activity of the catalyst compositions. 1,4-Benzoquinones and 1,4-naphthaquinones have proven very suitable for this purpose.

Optionally, components a) and b) can be combined for use in a single compound. An example of such a compound is the complex $Pd(CH_3CN)_2(O_3S\text{-}C_6H_4\text{-}CH_3)_2$, which can be prepared either by reaction of palladium chloride with the silver salt of para-toluenesulphonic acid in acetonitrile as the solvent, or by reaction of palladium acetate and para-toluenesulphonic acid in acetonitrile as the solvent.

The phosphorus bidentate ligands eligible for use in the catalyst compositions as component c), have the general formula $R^1R^2\text{-P-R-P-}R^3R_4$, wherein $R^1$, $R^2$, $R^3$ and $R^4$ represent hydrocarbyl groups which may or may not be substituted with polar groups and R represents a bivalent organic bridging group containing at least two carbon atoms in the bridge. The groups $R^1$, $R^2$, $R^3$ and $R^4$ present in the phosphorus bidentate ligand preferably contain 6 to 14 carbon atoms. Special preference is given to phosphorus bidentate ligands in which the groups $R^1$, $R^2$, $R^3$ and $R^4$ are phenyl groups or substituted phenyl groups. The bivalent organic bridging group R preferably has three carbon atoms in the bridge. Examples of suitable phosphorus bidentate ligands are 1,3-bis(di-p-tolylphosphine)propane, 1,3-bis(di-p-methoxyphosphine)propane, 1,3-bis-(diphenylphosphine)propane, and 2-methyl-2-(methyldiphenylphosphine)-1,3-bis(diphenylphosphine)-propane.

If a catalyst composition based upon a phosphorus bidentate ligand is used for the preparation of the polymers according to the invention, preference is given to either one of the two last-named phosphorus compounds. The phosphorus bidentate ligands are preferably used in the catalyst compositions in a quantity of 0.1-5, and in particular of 0.5-1.5, mol per mol of palladium compound.

Nitrogen bidentate ligands eligible for use in the catalyst compositions as component c), have the general formula

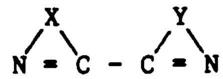

wherein X and Y represent similar or dissimilar bridging groups, each containing three or four atoms in the bridge, at least two of which are carbon atoms. In the nitrogen bidentate ligands the bridging groups X and Y are linked by the two carbon atoms shown in the general formula. In addition to this linkage, there may exist a further junction between the bridging groups X and Y, such as is the case with 1,10-phenanthroline and compounds derived therefrom. If, in addition to carbon atoms, the bridging groups X and Y contain further atoms in the bridge, these atoms are preferably nitrogen atoms. Further, preference is given to nitrogen bidentate ligands in which the bridging groups X and Y are similar. Examples of suitable nitrogen bidentate ligands are 2,2′-bipyridine and compounds derived therefrom and 1,10-phenanthroline and compounds derived therefrom. If a catalyst composition based upon a nitrogen bidentate ligand is used for the preparation of the polymers according to the invention, preference is given to the use of 2,2′-bipyridine or 1,10-phenanthroline. The nitrogen bidentate liands are preferably used in the catalyst compositions in quantities of 0.5-200, and in particular of 1-50, mol per mol of palladium compound.

The quantity of bidentate ligand-containing catalyst composition used in the preparation of the polymers according to the invention may vary within wide ranges. Per mol of olefinically unsaturated compound to be polymerized, such a quantity of catalyst is preferably used as to contain $10^{-7}$ to $10^{-3}$ and in particular $10^{-6}$ to $10^{-4}$ gram atom of palladium. The molar ratio of the olefinically unsaturated organic compounds relative to carbon monoxide is preferably 10:1-1:5 and in particular 5:1-1:2. In the monomer mixture from which the polymers are prepared the ratio between the monomers A and B should be so chosen that polymers containing 10-400 units -CO-(A′)- per unit -CO-(B′)- are obtained.

The preparation of the polymers according to the invention by using a bidentate ligand-containing catalyst is preferably carried out at a temperature of 20-200 °C and a pressure of 1-200 bar and in particular at a temperature of 30-150 °C and a pressure of 20-100 bar. Further, the polymerization is preferably carried out in a liquid diluent.

The invention will now be illustrated with the acid of the following examples.

Example 1

A carbon monoxide/ethene/methyl acrylate terpolymer was prepared as follows. A magnetically stirred autoclave of 250 ml capacity was charged with a catalyst solution comprising
40 ml of methanol,
0,1 mmol of palladium acetate,
2 mmol of copper para-tosylate, and
0,15 mmol of 1,3-bis(diphenylphosphine)propane.
After introduction of 20 ml of methyl acrylate into the autoclave, carbon monoxide was introduced with pressure until a pressure of 25 bar was reached, followed by ethene until a pressure of 50 bar was reached. Finally, the contents of the autoclave were heated to 90 °C. After 5 hours the polymerization was terminated by cooling to room temperature and subsequently releasing the pressure. The polymer was filtered off, washed with methanol and dried in vacuo at room temperature.
8.2 g of terpolymer with an average molecular weight of 3700 and a melting point of 235 °C was obtained.

Example 2

A carbon monoxide/ethene/methyl acrylate terpolymer was prepared in substantially the same way as the terpolymer of Example 1, the differences being

a) the catalyst solution contained 0.5 mmol of iron perchlorate instead of 2 mmol of copper para-tosylate,
b) 10 ml instead of 20 ml of methyl acrylate was introduced into the autoclave, and
c) the reaction temperature was 80 °C.

2 g of terpolymer with an average molecular weight of 16000 and a melting point of 235 °C was obtained.

Example 3

A carbon monoxide/ethene/methyl acrylate terpolymer was prepared in substantially the same way as the terpolymer of Example 1, the differences being

a) the catalyst solution contained 0.5 mmol of iron sulphate instead of 2 mmol copper para-tosylate,
b) 10 ml instead of 20 ml of methyl acrylate was introduced into the autoclave, and
c) the reaction temperature was 80 °C.
3 g of terpolymer with an average molecular weight of 1900 and a melting point of 230 °C was obtained.

Example 4

A carbon monoxide/ethene/methyl acrylate terpolymer was prepared in substantially the same way as the terpolymer of Example 1, the differences being
a) the catalyst solution contained 0.5 mmol of nickel perchlorate instead of 2 mmol of copper para-tosylate,
b) 10 ml instead of 20 ml of methyl acrylate was introduced into the autoclave, and
c) the reaction temperature was 80 °C.
1.5 g of terpolymer with an average molecular weight of 5200 and a melting point of 220 °C was obtained.

Example 5

A carbon monoxide/ethene/methyl acrylate terpolymer was prepared in substantially the same way as the terpolymer of Example 1, the differences being
a) the catalyst solution contained 2 mmol of trifluoroacetic acid instead of 2 mmol of copper para-tosylate,
b) 5 ml instead of 20 ml of methyl acrylate was introduced into the autoclave, and
c) the reaction temperature was 100 °C.
10.5 g of terpolymer with an average molecular weight of 3200 and a melting point of 220 °C was obtained.

Example 6

A carbon monoxide/ethene/vinyl acetate terpolymer was prepared as follows. A magnetically stirred autoclave of 250 ml capacity was charged with a catalyst solution comprising
50 ml of vinyl acetate,
0.1 mmol of palladium acetate,
0.5 mmol of copper para-tosylate,
0.15 mmol of 1,3-bis(diphenylphosphine)propane, and
2 mmol of 1,4-benzoquinone.
Carbon monoxide was introduced into the autoclave until a pressure of 30 bar was reached, followed by ethene, until a pressure of 45 bar was reached. Finally, the contents of the autoclave were heated to 90 °C. After 5 hours the polymerization was terminated by cooling to room temperature and then releasing the pressure. The polymer was filtered off, washed with methanol and dried in vacuo at room temperature.
8.6 g of terpolymer with an average molecular weight of 8000 and a melting point of 250 °C was obtained.

Example 7

A carbon monoxide/ethene/vinyl acetate terpolymer was prepared in substantially the same way as the terpolymer of Example 6, the differences being
a) the catalyst solution contained 0.5 mmol of iron perchlorate instead of 0.5 mmol of copper para-tosylate,
b) the reaction temperature was 80 °C.
2 g of terpolymer with an average molecular weight of 18000 and a melting point of 235 °C was obtained.

Example 8

A carbon monoxide/ethene/vinyl acetate terpolymer was prepared in substantially the same way as the terpolymer of Example 6, the differences being
a) the catalyst solution contained 0.5 mmol of nickel perchlorate instead of 0.5 mmol of copper para-tosylate,
b) the reaction temperature was 80 °C.
8.5 g of terpolymer with an average molecular weight of 30 000 and a melting point of 235 °C was obtained.

Example 9

A carbon monoxide/ethene/vinyl acetate terpolymer was prepared in substantially the same way as the terpolymer of Example 6, the differences being

a) the catalyst solution contained 0.5 mmol of nickel perchlorate instead of 0.5 mmol of copper para-tosylate and 2 mmol of 1,4-naphthaquinone instead of 2 mmol of 1,4-benzoquinone, and,

b) the reaction temperature was 80 °C.

6.1 g of terpolymer with an average molecular weight of 20 000 and a melting point of 240 °C was obtained.

Example 10

A carbon monoxide/ethene/vinyl acetate terpolymer was prepared in substantially the same way as the terpolymer of Example 6, the differences being

a) the catalyst solution contained 0.5 mmol of copper tetrafluoroborate instead of 0.5 mmol of copper para-tosylate,

b) the reaction temperature was 80 °C.

8.5 g of terpolymer with an average molecular weight of 12500 and a melting point of 245 °C was obtained.

Example 11

A carbon monoxide/ethene/methyl methacrylate terpolymer was prepared as follows. A mechanically stirred autoclave of 250 ml capacity was charged with a catalyst solution comprising
30 ml of methanol,
0,1 mmol of palladium acetate,
1 mmol of para-toluenesulphuric acid,
3 mmol of 2,2′-bipyridine, and
20 mmol of 1,4-benzoquinone.
After the introduction of 50 ml of methyl methacrylate into the autoclave, carbon monoxide was introduced until a pressure of 30 bar was reached, followed by ethene until a pressure of 45 bar was reached. Finally, the contents of the autoclave were heated to 90 °C. After 5 hours the polymerization was terminated by cooling to room temperature and then releasing the pressure. The polymer was filtered off, washed with methanol and dried in vacuo at room temperature.
11.1 g of terpolymer with an average molecular weight of 3600 and a melting point of 243 °C was obtained.

With the aid of $^{13}$C-NMR analysis it was established that the terpolymers prepared according to Examples 1-11 had a linear structure. With the aid of $^{13}$C-NMR analysis it was further established that the terpolymers prepared according to Examples 1-10 were made up of units of the formula $-CO-(C_2H_4)-$ and units of the formula $-CO-(C_4H_6O_2)-$ and that the terpolymer prepared according to Example 11 was made up of units of the formula $-CO-(C_2H_4)-$ and units of the fomula $-CO-(C_5H_8O_2)-$ and that said units occurred randomly distributed within the polymers. The data obtained by $^{13}$C-NMR analysis were used to determine the average numbers of units of formula $-CO-(C_2H_4)-$ occurring in the polymers per unit of either the formula $-CO-(C_4H_6O_2)-$ or the formula $-CO-(C_5H_8O_2)-$. These values are collected in the table.

Table

| Terpolymers prepared according to Ex. No. | Average number of units of formula $-CO-(C_2H_4)-$ per unit of formula $-CO-(C_4H_6O_2)-$ or $-CO-(C_5H_8O_2)-$. |
|---|---|
| 1 | 23 |
| 2 | 22 |
| 3 | 20 |
| 4 | 17 |
| 5 | 13 |
| 6 | 250 |
| 7 | 77 |
| 8 | 67 |
| 9 | 125 |
| 10 | 200 |
| 11 | 80 |

## Claims

**Claims for the following Contracting States : BE, CH, DE, FR, GB, IT, LI, NL, SE**

1. Polymers of carbon monoxide with at least two olefinically unsaturated organic compounds, characterized in that
   a) they are prepared by the polymerization of carbon monoxide with one or more olefinically unsaturated hydrocarbons (A) and with one or more carboxylic acid esters (B) in which there occurs a polymerizable $>C=C<$ group directly linked to a carbonyloxy group,
   b) they have a linear structure,
   c) they are made up of units of the general formula -CO-(A')- and units of the general formula -CO-(B')-, wherein A' and B' represent monomer units originating in monomers A and B, respectively, used and
   d) per unit -CO-(B')- they contain 10-400 units -CO-(A')-.

2. Polymers as claimed in claim 1, characterized in that per unit -CO-(B')- they contain fewer than 300 units -CO-(A')-.

3. Polymers as claimed in claim 1 or 2, characterized in that the monomers A used contain at most 10 carbon atoms.

4. Polymers as claimed in any one of claims 1 to 3, characterized in that monomer A is ethene.

5. Polymers as claimed in any one of claims 1 to 4, characterized in that monomer B is an ester of a saturated aliphatic monocarboxylic acid in which a $CH_2=CR$ group occurs directly linked to the

carbonyloxy group and in which R represents an alkyl group or a hydrogen atom.

**6.** Polymers as claimed in claim 5, characterized in that monomer B is vinyl acetate.

**7.** Polymers as claimed in any one of claims 1 to 4, characterized in that monomer B is an alkyl ester of an unsaturated aliphatic monocarboxylic acid, in which a $CH_2=CR$-group occurs directly linked to the carbonyloxy group and in which R represents an alkyl group or a hydrogen atom.

**8.** Polymers as claimed in claim 7, characterized in that monomer B is methyl acrylate or methyl methacrylate.

**9.** Novel polymers obtained from the polymers of any one of claims 1 to 8 by converting at least part of the carbonyl and/or carbonyloxy groups into other functional groups by way of chemical modification.

**10.** Process for the preparation of polymers as claimed in any one of claims 1 to 8, characterized in that a mixture of carbon monoxide, one or more monomers A and one or more monomers B is polymerized by using a catalyst composition based upon

a) a palladium compound,

b) an anion of an acid with a pKa of less than 2, provided that the acid is not a hydrohalogenic acid, and

c) either a phosphorus bidentate ligand of the general formula $R^1R^2$-P-R-P-$R^3R^4$, wherein $R^1$, $R^2$, $R^3$ and $R^4$ represent hydrocarbyl groups which may or may not be substituted with polar groups and R represents a bivalent organic bridging group containing at least two carbon atoms in the bridge, or a nitrogen bidentate ligand of the general formula

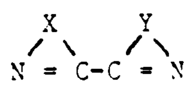

wherein X and Y represent similar or dissimilar bridging groups, each containing three or four atoms in the bridge at least two of which are carbon atoms.

**Claims for the following Contracting States : AT, ES, GR**

**1.** Process for the preparation of polymers of carbon monoxide with at least two olefinically unsaturated organic compounds, characterized in that

a) carbon monoxide is polymerized with one or more olefinically unsaturated hydrocarbons (A) and with one or more carboxylic acid esters (B) in which there occurs a polymerizable $>C=C<$ group directly linked to a carbonyloxy group,

b) the polymers have a linear structure,

c) the polymers are made up of units of the general formula -CO-(A')- and units of the general formula -CO-(B')-, wherein A' and B' represent monomer units originating in monomers A and B, respectively, used and

d) per unit -CO-(B')- the polymers contain 10-400 units -CO-(A')-.

**2.** Process as claimed in claim 1, characterized in that polymers are prepared which per unit -CO-(B' )- contain fewer than 300 units -CO-(A')-.

**3.** Process as claimed in claim 1 or 2, characterized in that the monomers A used contain at most 10 carbon atoms.

**4.** Process as claimed in any one of claims 1 to 3, characterized in that monomer A is ethene.

**5.** Process as claimed in any one of claims 1 to 4, characterized in that monomer B is an ester of a saturated aliphatic monocarboxylic acid in which a $CH_2=CR$-group occurs directly linked to the carbonyloxy group and in which R represents an alkyl group or a hydrogen atom.

**6.** Process as claimed in claim 5, characterized in that monomer B is vinyl acetate.

7. Process as claimed in any one of claims 1 to 4, characterized in that monomer B is an alkyl ester of an unsaturated aliphatic monocarboxylic acid, in which a $CH_2=CR$-group occurs directly linked to the carbonyloxy group and in which R represents an alkyl group or a hydrogen atom.

8. Process as claimed in claim 7, characterized in that monomer B is methyl acrylate or methyl methacrylate.

9. Process for the preparation of polymers obtained from the polymers of any one of claims 1 to 8, comprising converting at least part of the carbonyl and/or carbonyloxy groups into other functional groups by way of chemical modification.

10. Process as claimed in any one of claims 1 to 8, characterized in that a mixture of carbon monoxide, one or more monomers A and one or more monomers B is polymerized by using a catalyst composition based upon
a) a palladium compound,
b) an anion of an acid with a pKa of less than 2, provided that the acid is not a hydrohalogenic acid, and
c) either a phosphorus bidentate ligand of the general formula $R^1R^2$-P-R-P-$R^3R^4$, wherein $R^1$, $R^2$, $R^3$ and $R^4$ represent hydrocarbyl groups which may or may not be substituted with polar groups and R represents a bivalent organic bridging group containing at least two carbon atoms in the bridge, or a nitrogen bidentate ligand of the general formula

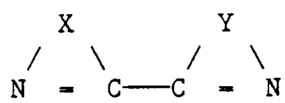

wherein X and Y represent similar or dissimilar bridging groups, each containing three or four atoms in the bridge at least two of which are carbon atoms.

**Patentansprüche**
**Patentansprüche für folgende Vertragsstaaten : BE, CH, DE, FR, GB, IT, LI, NL, SE**

1. Polymere von Kohlenmonoxid mit wenigstens zwei olefinisch ungesättigten organischen Verbindungen, dadurch gekennzeichnet, daß sie
a) durch Polymerisation von Kohlenmonoxid mit einem oder mit mehreren olefinisch ungesättigten Kohlenwasserstoffen (A) und mit einem oder mit mehreren Carbonsäureestern (B), worin eine polymerisierbare $>C=C<$ -Gruppe in direkter Verknüpfung mit einer Carbonyloxygruppe vorliegt, hergestellt werden,
b) eine lineare Struktur aufweisen,
c) aus Einheiten mit der allgemeinen Formel -CO-(A')- und aus Einheiten mit der allgemeinen Formel -CO-(B')- bestehen, worin A' und B' Monomereinheiten darstellen, die in den eingesetzten Monomeren A bzw. B ihren Ursprung haben und
d) je Einheit -CO-(B')- 10 bis 400 Einheiten -CO-(A')- enthalten.

2. Polymere nach Anspruch 1, dadurch gekennzeichnet, daß sie je Einheit -CO-(B')- weniger als 300 Einheiten -CO-(A')- enthalten.

3. Polymere nach Anspruch 1 oder 2, dadurch gekennzeichnet, daß die verwendeten Monomeren A höchstens 10 Kohlenstoffatome enthalten.

4. Verfahren nach einem der Ansprüche 1 bis 3, dadurch gekennzeichnet, daß das Monomer A Ethen ist.

5. Polymere nach einem der Ansprüche 1 bis 4, dadurch gekennzeichnet, daß das Monomer B ein Ester einer gesättigten aliphatischen Monocarbonsäure ist, worin eine $CH_2=CR$-Gruppe in direkter Verknüpfung mit der Carbonyloxygruppe vorliegt und worin R eine Alkylgruppe oder ein Wasserstoffatom bedeutet.

6. Polymere nach Anspruch 5, dadurch gekennzeichnet, daß das Monomer B Vinylacetat ist.

7. Polymere nach einem der Ansprüche 1 bis 4, dadurch gekennzeichnet, daß das Monomer B ein Alkylester einer ungesättigten aliphatischen Monocarbonsäure ist, worin eine $CH_2 = CR$-Gruppe in direkter Verknüpfung mit der Carbonyloxygruppe vorliegt und worin R eine Alkylgruppe oder ein Wasserstoffatom bedeutet.

8. Polymere nach Anspruch 7, dadurch gekennzeichnet, daß das Monomer B Methylacrylat oder Methylmethacrylat ist.

9. Neue Polymere, erhalten aus den Polymeren nach einem der Ansprüche 1 bis 8 durch Umwandlung wenigstens eines Teils der Carbonyl- und/oder Carbonyloxygruppe in andere funktionelle Gruppe durch chemische Modifizierung.

10. Verfahren zur Herstellung von Polymeren nach einem der Ansprüche 1 bis 8, dadurch gekennzeichnet, daß ein Gemisch aus Kohlenmonoxid, einem oder mehreren Monomeren A und einem oder mehreren Monomeren B unter Verwendung einer Katalysatorzusammensetzung auf der Basis
a) einer Palladiumverbindung,
b) eines Anions einer Säure mit einem pKa-Wert von kleiner als 2, mit der Maßgabe, daß die Säure nicht eine Halogenwasserstoffsäure ist, und
c) entweder eines Phosphorbidentatliganden mit der allgemeinen Formel $R^1R^2$-P-R-P-$R^3R^4$, worin $R^1$, $R^2$, $R^3$ und $R^4$ Hydrocarbylgruppen bedeuten, die mit polaren Gruppen substituiert oder nicht substituiert sein können und R eine zweiwertige organische Brückengruppe darstellt, die wenigstens zwei Kohlenstoffatome in der Brücke enthält, oder eines Stickstoffbidentatliganden mit der allgemeinen Formel

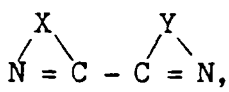

worin X und Y gleiche oder verschiedene Brückengruppen bedeuten, die jeweils drei oder vier Atome in der Brücke enthalten, von denen wenigstens zwei Kohlenstoffatome sind,
polymerisiert wird.

**Patentansprüche für folgende Vertragsstaaten : AT, ES, GR**

1. Verfahren zur Herstellung von Polymeren von Kohlenmonoxid mit wenigstens zwei olefinisch ungesättigten organischen Verbindungen, dadurch gekennzeichnet, daß
a) Kohlenmonoxid mit einem oder mit mehreren olefinisch ungesättigten Kohlenwasserstoffen (A) und mit einem oder mit mehreren Carbonsäureestern (B), worin eine polymerisierbare $>C=C<$ -Gruppe in direkter Verknüpfung mit einer Carbonyloxygruppe vorliegt, polymerisiert wird,
b) die Polymeren eine lineare Struktur aufweisen,
c) die Polymeren aus Einheiten mit der allgemeinen Formel -CO-(A')- und aus Einheiten mit der allgemeinen Formel -CO-(B')- bestehen, worin A' und B' Monomereinheiten darstellen, die in den eingesetzten Monomeren A bzw. B ihren Ursprung haben und
d) die Polymeren je Einheit -CO-(B')- 10 bis 400 Einheiten -CO-(A')- enthalten.

2. Verfahren nach Anspruch 1, dadurch gekennzeichnet, daß Polymere hergestellt werden, die je Einheit -CO-(B')- weniger als 300 Einheiten -CO-(A')- enthalten.

3. Verfahren nach Anspruch 1 oder 2, dadurch gekennzeichnet, daß die verwendeten Monomeren A höchstens 10 Kohlenstoffatome enthalten.

4. Verfahren nach einem der Ansprüche 1 bis 3, dadurch gekennzeichnet, daß das Monomer A Ethen ist.

5. Verfahren nach einem der Ansprüche 1 bis 4, dadurch gekennzeichnet, daß das Monomer B ein Ester einer gesättigten aliphatischen Monocarbonsäure ist, worin eine $CH_2 = CR$-Gruppe in direkter Verknüpfung mit der Carbonyloxygruppe vorliegt und worin R eine Alkylgruppe oder ein Wasserstoffatom bedeutet.

**6.** Verfahren nach Anspruch 5, dadurch gekennzeichnet, daß das Monomer B Vinylacetat ist.

**7.** Verfahren nach einem der Ansprüche 1 bis 4, dadurch gekennzeichnet, daß das Monomer B ein Alkylester einer ungesättigten aliphatischen Monocarbonsäure ist, worin eine $CH_2CR$-Gruppe in direkter Verknüpfung mit der Carbonyloxygruppe vorliegt und worin R eine Alkylgruppe oder ein Wasserstoffatom bedeutet.

**8.** Verfahren nach Anspruch 7, dadurch gekennzeichnet, daß das Monomer B Methylacrylat oder Methylmethacrylat ist.

**9.** Verfahren zur Herstellung von Polymeren, erhalten aus den Polymeren, nach einem der Ansprüche 1 bis 8, umfassend ein Umwandeln wenigstens eines Teiles der Carbonyl- und/oder Carbonyloxygruppen in andere funktionelle Gruppen durch chemische Modifizierung.

**10.** Verfahren nach einem der Ansprüche 1 bis 8, dadurch gekennzeichnet, daß ein Gemisch aus Kohlenmonoxid, einem oder mehreren Monomeren A und einem oder mehreren Monomeren B unter Verwendung einer Katalysatorzusammensetzung auf der Basis

a) einer Palladiumverbindung,

b) eines Anions einer Säure mit einem pKa-Wert von kleiner als 2, mit der Maßgabe, daß die Säure nicht eine Halogenwasserstoffsäure ist, und

c) entweder eines Phosphorbidentatliganden mit der allgemeinen Formel $R^1R^2$-P-R-P-$R^3R^4$, worin $R^1$, $R^2$, $R^3$ und $R^4$ Hydrocarbylgruppen bedeuten, die mit polaren Gruppen substituiert oder nicht substituiert sein können und R eine zweiwertige organische Brückengruppe darstellt, die wenigstens zwei Kohlenstoffatome in der Brücke enthält, oder eines Stickstoffbidentatliganden mit der allgemeinen formel

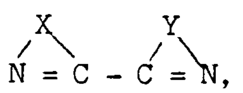

worin X und Y gleiche oder verschiedene Brückengruppen bedeuten, die jeweils drei oder vier Atome in der Brücke enthalten, von denen wenigstens zwei Kohlenstoffatome sind,

polymerisiert wird.

**Revendications**

**Revendications pour les Etats contractants suivants : BE, CH, DE, FR, GB, IT, LI, NL, SE**

**1.** Polymères d'oxyde de carbone avec au moins deux composés organiques oléfiniquement insaturés, caractérisés en ce que

a) ils sont préparés par la polymérisation d'oxyde de carbone avec un ou plusieurs hydrocarbures oléfiniquement insaturés (A) et avec un ou plusieurs esters d'acides carboxyliques (B) dans lesquels est présent un groupe polymérisable $>C=C<$ lié directement à un groupe carbonyloxy,

b) ils ont une structure linéaire,

c) ils sont constitués de mailles de la formule générale -CO-(A')- et de mailles de la formule générale -CO-(B')-, où A' et B' représentent des unités monomères dérivées des monomères A et B, respectivement, utilisés et

d) par maille -CO-(B')-, ils contiennent 10-400 mailles -CO-(A')-.

**2.** Polymères selon la revendication 1, caractérisés en ce que, par maille -CO-(B')-, ils contiennent moins de 300 mailles -CO-(A')-.

**3.** Polymères selon la revendication 1 ou 2, caractérisés en ce que les monomères A utilisés contiennent au maximum 10 atomes de carbone.

4. Polymères selon l'une quelconque des revendications 1 à 3, caractérisés en ce que le monomère A est l'éthène.

5. Polymères selon l'une quelconque des revendications 1 à 4, caractérisés en ce que le monomère B est un ester d'un acide monocarboxylique aliphatique saturé dans lequel est présent un groupe $CH_2=CR$- lié directement au groupe carbonyloxy et où R représente un groupe alcoyle ou un atome d'hydrogène.

6. Polymères selon la revendication 5, caractérisés en ce que le monomère B est l'acétate de vinyle.

7. Polymères selon l'une quelconque des revendications 1 à 4, caractérisés en ce que le monomère B est un ester d'alcoyle d'un acide monocarboxylique aliphatique insaturé, dans lequel est présent un groupe $CH_2=CR$- lié directement au groupe carbonyloxy et dans lequel R représente un groupe alcoyle ou un atome d'hydrogène.

8. Polymères selon la revendication 7, caractérisés en ce que le monomère B est l'acrylate de méthyle ou le méthacrylate de méthyle.

9. Nouveaux polymères obtenus à partir des polymères de l'une quelconque des revendications 1 à 8 par conversion d'au moins une partie des groupes carbonyle et/ou carbonyloxy en d'autres groupes fonctionnels par modification chimique.

10. Procédé pour la préparation de polymères tels que revendiqués dans l'une quelconque des revendications 1 à 8, caractérisé en ce qu'on polymérise un mélange d'oxyde de carbone, d'un ou plusieurs monomères A et d'un ou plusieurs monomères B en utilisant une composition catalytique à base de
    a) un composé du palladium,
    b) un anion d'un acide d'un pKa de moins de 2, avec la condition que l'acide n'est pas un acide halogénhydrique, et
    c) soit un ligand bidenté du phosphore de la formule générale $R^1R^2$-P-R-P-$R^3R^4$, où $R^1$, $R^2$, $R^3$ et $R^4$ représentent des groupes hydrocarbyle qui peuvent être substitués ou ne pas être substitués par des groupes polaires et R représente un groupe organique bivalent formant pont contenant au moins deux atomes de carbone dans le pont, soit un ligand bidenté de l'azote de la formule générale

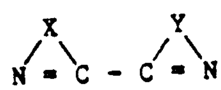

où X et Y représentent des groupes formant pont identiques ou différents, contenant chacun trois ou quatre atomes dans le pont, dont au moins deux sont des atomes de carbone.

**Revendications pour les Etats contractants suivants : AT, ES, GR**

1. Procédé de préparation de polymères de monoxyde de carbone avec au moins deux composés organiques oléfiniquement insaturés, caractérisé en ce que:
    a) on polymérise le monoxyde de carbone avec un ou plusieurs hydrocarbures oléfiniquement insaturés (A) et avec un ou plusieurs esters d'acides carboxyliques (B) dans lesquels se trouve un groupe $>C=C<$ polymérisable directement lié à un groupe carbonyloxy,
    b) les polymères ont une structure linéaire,
    c) les polymères sont constitués d'unités de formule générale -CO-(A')- et d'unités de formule générale -CO-(B')- , où A' et B' représentent des unités monomères provenant des monomères A et B, respectivement, utilisés, et
    d) par unité -CO-(B')- les polymères contiennent 10-400 unités -CO-(A')-.

2. Procédé selon la revendication 1, caractérisé en ce qu'on prépare des polymères qui par unité -CO-(B')- contiennent moins de 300 unités -CO-(A')-.

3. Procédé selon la revendication 1 ou 2, caractérisé en ce que les monomères A utilisés contiennent au plus 10 atomes de carbone.

**4.** Procédé selon l'une quelconque des revendications 1 à 3, caractérisé en ce que le monomère A est l'éthylène.

**5.** Procédé selon l'une quelconque des revendications 1 à 4, caractérisé en ce que le monomère B est un ester d'un acide monocarboxylique aliphatique saturé dans lequel un groupe $CH_2=CR$- apparaît directement lié au groupe carbonyloxy et dans lequel R représente un groupe alcoyle ou un atome d'hydrogène.

**6.** Procédé selon la revendication 5, caractérisé en ce que le monomère B est l'acétate de vinyle.

**7.** Procédé selon l'une quelconque des revendications 1 à 4, caractérisé en ce que le monomère B est un ester alcoylique d'un acide monocarboxylique aliphatique insaturé, dans lequel un groupe $CH_2=CR$- apparaît directement lié au groupe carbonyloxy et dans lequel R représente un groupe alcoyle ou un atome d'hydrogène.

**8.** Procédé selon la revendication 7, caractérisé en ce que le monomère B est l'acrylate de méthyle ou le méthacrylate de méthyle.

**9.** Procédé de préparation de polymères obtenus à partir des polymères de l'une quelconque des revendications 1 à 8, dans lequel on transforme au moins une partie des groupes carbonyle et/ou carbonyloxy en d'autres groupes fonctionnels par une modification chimique.

**10.** Procédé selon l'une quelconque des revendications 1 à 8, caractérisé en ce qu'on polymérise un mélange de monoxyde de carbone, d'un ou plusieurs monomères A et d'un ou plusieurs monomères B en utilisant une composition de catalyseur à base de

a) un composé de palladium,

b) un anion d'un acide ayant un pKa inférieur à 2, à condition que l'acide ne soit pas un acide halohydrique, et

c) soit un coordinat bidenté de phosphore de formule générale $R^1R^2$-P-R-P-$R^3R^4$ , où $R^1$, $R^2$, $R^3$ et $R^4$ représentent des groupes hydrocarbyle qui peuvent ou non être substitués par des groupes polaires et R représente un groupe de pontage organique bivalent contenant au moins deux atomes de carbone dans le pont, soit un coordinat bidenté d'azote de formule générale

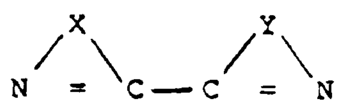

dans laquelle X et Y représentent des groupes de pontage identiques ou différents, contenant chacun trois ou quatre atomes dans le pont, dont au moins deux sont des atomes de carbone.